# FASCICULE DE BREVET EUROPEEN

(11) **EP 0 624 750 B1**
(45) Date de publication et mention de la délivrance du brevet: **23.07.1997**
(21) Numéro de dépôt: 94440032.4
(22) Date de dépôt: 11.05.1994
(51) Int. Cl.: F16P 3/20, H01H 47/00

(54) **Dispositif de branchement et de synthèse logique d'une pluralité de paires d'éléments de commutation**
Vorrichtung zur Verbindung und logischen Verknüpfung einer Vielzahl von Schaltelementenpaaren
Device for branching and logically combining a plurality of pairs of switching elements

(30) Priorité: 12.05.1993 FR 9305898
(43) Date de publication de la demande: 17.11.1994
(73) Titulaire: SENSTRONIC, S.A., F-67700 Saverne (FR)
(72) Inventeur: Kirchdoerffer, Rémy, F-67110 Niederbronn les Bains (FR)
(74) Mandataire: Nuss, Pierre

(56) Documents cités:
- EP-A- 0 241 270
- FR-A- 2 390 666

## Description

La présente invention concerne le domaine du contrôle de fonctionnement de procédés ou de dispositifs, notamment à commande automatique et a pour objet un dispositif de branchement et de synthèse logique d'une pluralité de paires d'éléments de commutation.

Actuellement le contrôle d'un procédé ou d'un dispositif automatisé est réalisé généralement au moyen de capteurs ou de détecteurs reliés directement aux automates de commandes.

Toutefois, pour la vérification de certaines étapes importantes d'un procédé ou de certains états critiques d'un dispositif, on met en oeuvre, pour s'assurer avec une fiabilité élevée de la réalisation dudit état ou de ladite fonction, plusieurs éléments de commutation, du type détecteur, contact ou barrière de passage, complémentaires, redondants et groupés par paire, dans laquelle l'un des éléments indique positivement la réalisation d'un premier état et l'autre positivement la réalisation d'un second état.

En outre, dans le cas des ensembles ou des fonctions complexes, pouvant se trouver dans deux états généraux distincts et faisant intervenir plusieurs parties, facteurs ou éléments, il est nécessaire, pour déterminer l'état général d'un tel ensemble, de prendre en considération les états de chacune des parties, facteurs ou éléments contribuant audit état général de l'ensemble considéré, et, notamment au moyen d'éléments de commutation complémentaire deux à deux de vérifier respectivement la réalisation dudit premier état ou dudit second état pour chacun desdits facteurs, éléments ou parties.

Actuellement, chacun desdits éléments de commutation est relié directement à une entrée d'un automate et nécessite donc une connexion et un traitement particulier, d'où résulte une très grande complexité au niveau de l'interface, de la connectique et de la programmation et un prix de revient très élevé.

La présente invention a notamment pour but de pallier cet inconvénient.

A cet effet elle a pour objet un dispositif de branchement et de synthèse logique d'une pluralité de paires d'éléments de commutation selon la revendication 1.

L'invention sera mieux comprise grâce à la description ci-après, qui se rapporte à des modes de réalisation préférés, donnés à titre d'exemples non limitatifs, et expliqués avec référence aux dessins schématiques annexés, dans lesquels:
la figure 1 est un schéma fonctionnel du dispositif conforme à l'invention;
la figure 2 est une vue de dessus d'un boîtier contenant le dispositif représenté à la figure 1;
la figure 3 est un schéma fonctionnel d'un mode de réalisation d'un circuit de remplacement et de simulation faisant partie du dispositif conforme à l'invention;
la figure 4 est une vue en élévation latérale du circuit représenté à la figure 3 selon un second mode de réalisation, et,
la figure 5 est un schéma synoptique d'un montage de voyant de signalisation selon l'invention.

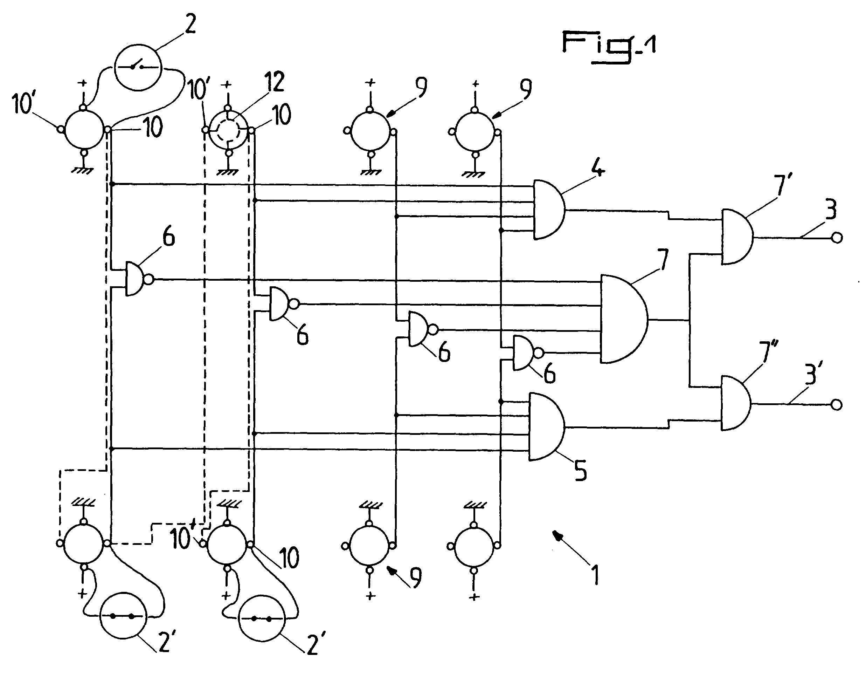

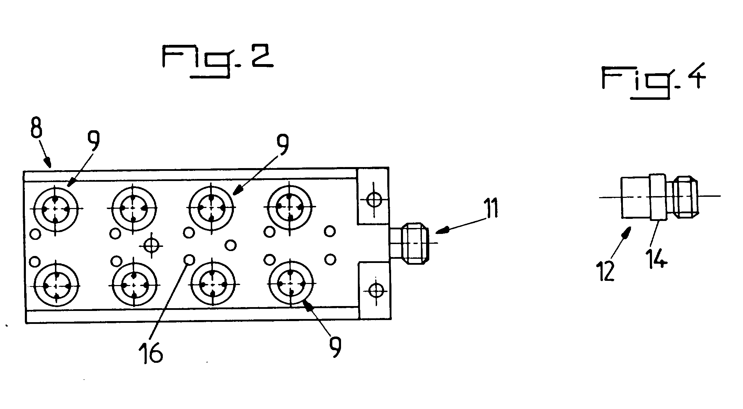

Conformément à l'invention, et comme le montrent les figures 1 et 2 des dessins annexés, le dispositif de branchement et de synthèse logique présente une pluralité de paires d'éléments de commutation à deux états, les éléments de commutation de chaque paire indiquant de manière complémentaire et opposée, l'un, la réalisation d'un premier état, et, l'autre, la réalisation d'un second état, distinct du premier état, notamment d'une partie ou d'un élément d'un ensemble complexe pouvant se trouver dans deux états généraux déterminés distincts, caractérisé en ce qu'il présente deux sorties 3, 3' de signaux indiquant, chacune, positivement un état général de l'ensemble considéré, lorsque les éléments de commutation 2, 2' indiquent positivement la réalisation d'un premier état, d'une part, et négativement la non réalisation d'un second état, d'autre part, ou réciproquement, pour chacune des parties ou chacun des éléments contribuant concomitamment audit état général de l'ensemble, les signaux desdites sorties 3, 3' n'étant validés qu'après vérification des états complémentaires des éléments de commutation 2, 2' de chaque paire et des signaux identiques au niveau desdites sorties 3, 3' indiquant un état général indéterminé de l'ensemble complexe.

Ainsi, selon une réalisation pratique de l'invention, tous les signaux de sortie des éléments de commutation 2 indiquant positivement l'état des parties ou éléments contribuant à un premier état général de l'ensemble et négativement l'état des parties ou éléments contribuant au second état général dudit ensemble, peuvent être amenés ensemble à l'entrée d'une porte logique ET 4.

De même, tous les signaux de sortie des éléments de commutation 2', complémentaires des éléments de commutation 2, peuvent être menés ensemble à l'entrée d'une porte logique ET 5.

En outre, les signaux de sortie des éléments de commutation 2 et 2' de chaque paire pourront être amenés, pour chaque paire, à l'entrée d'une porte ET (non ET)6 respective, les sorties de l'ensemble desdites portes ET 6 étant amenées à l'entrée d'une autre porte ET 7.

Le signal de sortie de cette dernière porte ET 7 servira alors de critère de validation des signaux de sortie des portes ET 4 et 5 au moyen de deux portes ET 7' et 7" supplémentaires reliées, au niveau de leurs entrées, l'une 7' aux sorties des portes ET 5 et l'autre 7", les sorties desdites portes ET 7' et 7" constituant les sorties de signaux 3 et 3' (Voir figure 1).

Une telle disposition permettra de prendre en compte au niveau des sorties 3 et 3' de signaux non pas seulement l'état des éléments de commutation 2 et 2', mais également leur passage d'un premier état à un second état et permettra ainsi de vérifier le bon fonctionnement des éléments de commutation 2, 2' par l'intermédiaire de la prise en compte de leurs changements d'état.

Selon un premier mode de réalisation de l'invention, les éléments de commutation 2, 2' consistent en des détecteurs de proximité, préférentiellement du type inductif, de contact ou de passage.

Comme le montre la figure 2 des dessins annexés, le dispositif 1 de branchement peut être disposé dans un boîtier 8, de forme parallélépipédique ou cylindrique, portant, sur l'une de ses faces ou sur son enveloppe, une pluralité de connecteurs 9 par exemple à quatre ou cinq broches 10, 10' avantageusement disposés deux par deux, en étant alignés sur deux rangées, et destinés au branchement des fils de raccordements des différentes paires d'éléments de commutation 2, 2' complémentaires, au moyen de fiches de connexion à brochage complémentaire, un connecteur 11 de sortie, similaire aux connecteurs 9 et monté sur l'une des autres faces ou sur la base dudit boîtier 8, portant les sorties 3, 3' de signaux dudit dispositif 1.

Les connecteurs des éléments de commutation 2, 2' présentent préférentiellement quatre ou cinq broches 10, 10' permettant le branchement d'éléments de commutation 2, 2' réalisés en technologie deux fils ou trois fils, une broche 10, dite de sortie, étant affectée à la sortie signal de l'élément de commutation 2, 2' considérée, dont l'entrée est reliée au potentiel d'alimentation, et au moins une broche 10' desdits connecteurs 9 n'étant pas utilisée pour la liaison avec l'élément de commutation 2, 2' correspondant.

Les autres broches des connecteurs 9 pourront être reliées, d'une part, au potentiel d'alimentation et, d'autre part, à la masse, voire à la terre (Figure 1).

Conformément à un autre mode de réalisation de l'invention et afin de permettre une mise en oeuvre du dispositif 1 de branchement en cas d'utilisation d'un nombre impair d'éléments de commutation 2, 2', ledit dispositif 1 comprend un ou plusieurs circuits 12 de remplacement et de simulation de la présence d'un élément de commutation 2 ou 2' indiquant systématiquement un état opposé à ou inverse de celui de l'élément de commutation 2 ou 2' complémentaire associé audit élément de commutation 2' ou 2 remplacé par ledit circuit 12 et avec lequel il forme une paire quel que soit le nombre de ces derniers.

Cette disposition permet de conserver la fonction de validation par vérification des états complémentaires des éléments de commutation 2, 2' de chaque paire.

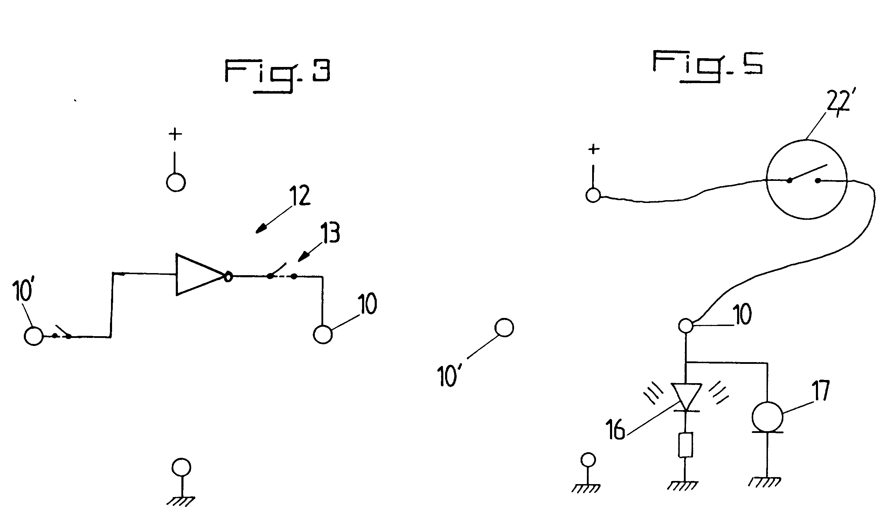

Comme le montre la figure 3 des dessins annexés, et selon une première variante de réalisation de l'invention, les circuits 12 de remplacement et de simulation peuvent être installés à demeure dans le boîtier 8 contenant ledit dispositif 1, au niveau de chacun des connecteurs 9 de branchement des fils de raccordement des éléments de commutation 2, 2', leur connexion, n'étant effective qu'en l'absence de branchement d'éléments de commutation 2, 2' au niveau des connecteurs 9 considérés.

Cette connexion et mise en service desdits circuits 12 pourra être effectuée au moyen d'interrupteurs 13, interposés entre lesdits circuits 12 et les broches 10, 10' concernées des connecteurs 9 et commandés par un dispositif de détection de l'absence de branchement d'élément de commutation 2 ou 2', par exemple par mesurage du courant de fuite résiduel desdits éléments de commutation 2, 2'.

Conformément à une seconde variante de réalisation de l'invention, représentée à la figure 4 des dessins annexés, chaque circuit 12 de remplacement et de simulation est disposé dans un boîtier 14 à connecteurs, de faible taille et en forme de bouchon, pouvant être enfiché de manière amovible sur les connecteurs 9 du boîtier 8 contenant le dispositif 1 en lieu et place des fiches de connexion des fils de raccordement de l'élément de commutation 2 ou 2' à remplacer.

L'utilisateur pourra ainsi vérifier rapidement, de visu, le nombre de circuits 12 de remplacement et de simulation mis en place et les éléments de commutation 2 ou 2' remplacés.

Comme le montre également la figure 1 des dessins annexés, les différents commutateurs peuvent être reliés entre eux de manière à former une chaîne continue et bouclée, la broche de sortie 10 de chaque connecteur 9 étant reliée à la broche non affectée 10' d'un connecteur 9 d'un élément de commutation 2 ou 2' dont l'état est opposé à celui de l'élément de commutation 2 ou 2' fixé sur le connecteur 9 précédent dans la chaîne.

Dans ce dernier cas, le circuit 12 de remplacement et de simulation peut avantageusement consister en un circuit inverseur dont l'entrée est reliée à la broche non affectée 10' du connecteur 9 de l'élément de commutation 2 ou 2' à remplacer et dont la sortie est reliée à la broche 10 de sortie dudit connecteur 9.

Selon une caractéristique supplémentaire de l'invention, représentée aux figures 2 et 5 des dessins annexés, il est associé, à chaque connecteur 9, un voyant 16 de signalisation d'état , monté en série avec l'élément de commutation 2 ou 2' branché sur le connecteur 9 considéré, un composant 17 d'absorption du courant résiduel de l'élément de commutation 2 ou 2' étant monté en parallèle sur ledit voyant 16.

Cette dernière disposition permet d'éliminer une éventuelle semi-luminosité du voyant 16 en cas de présence d'un courant de fuite résiduel lorsque l'élément de commutation 2 ou 2' est à l'état ouvert. Ainsi, il existe toujours une distinction nette entre l'état ouvert et l'état fermé de l'élément de commutation considéré, signalés par ledit voyant 16.

De manière avantageuse, le composant 17 peut se présenter sous la forme d'une diode de courant comportant une impédance inférieure à celle de la branche parallèle comprenant la diode électroluminescente constituant le voyant 16.

Bien entendu, l'invention n'est pas limitée au mode de réalisation décrits ci-dessus. Des modifications restent possibles, notamment du point de vue de la constitution des divers éléments, ou par substitution d'équivalents techniques, sans sortir pour autant du domaine de protection de l'invention, tel que définie dans les revendications.

## Revendications

1. Dispositif (1) de branchement et de synthèse logique d'une pluralité de paires d'éléments de commutation (2', 2) à deux états, les éléments de commutation de chaque paire indiquant normalement de manière complémentaire et opposée, l'un, la réalisation d'un premier état, et, l'autre, la réalisation d'un second état, distinct du premier état, d'une partie respective ou d'un élément respectif d'un ensemble complexe, l'ensemble complexe pouvant se trouver dans un premier ou un second état général de deux états généraux déterminés distincts, caractérisé en ce que le dispositif présente deux sorties (3', 3) de signaux binaires, le premier état général de l'ensemble complexe étant indiqué par une première sortie (3') desdites sorties (3', 3) prenant une valeur prédéterminée et la seconde sortie (3) desdits sorties prenant l'état complementaire de la première sortie, lorsque, pour chacune des parties ou chacun des éléments de l'ensemble complexe, l'élément de commutation (2') contribuant concomitamment audit premier état général de l'ensemble complexe, indique positivement la réalisation du premier état, d'une part, et l'élément de commutation (2) contribuant concomitamment au second état général de l'ensemble complexe indique négativement la non réalisation du second état, d'autre part, ou inversement le second état général de l'ensemble complexe étant indiqué par la seconde sortie (3) prenant ladite valeur prédéterminée et la première sortie (3') prenant l'état complementaire de la seconde sortie, lorsque, pour chacune des parties ou chacun des éléments de l'ensemble complexe, l'élément de commutation (2') contribuant concomitamment audit premier état général de l'ensemble complexe, indique négativement la non réalisation du premier état, d'une part, et l'élément de commutation (2) contribuant concomitamment au second état général de l'ensemble complexe indique positivement la réalisation du second état, d'autre part, les signaux desdites sorties (3', 3) n'étant validés qu'après vérification des états complémentaires des éléments de commutation (2', 2) de chaque paire, et les signaux desdites sorties (3', 3) étant identiques lorsque l'ensemble complexe est dans un état général autre que lesdits premier et second états généraux.

2. Dispositif selon la revendication 1, caractérisé en ce que les éléments de commutation (2, 2') consistent en des détecteurs de proximité, préférentiellement du type inductif, de contact ou de passage.

3. Dispositif selon l'une quelconque des revendications 1 et 2, caractérisé en ce qu'il est disposé dans un boîtier (8), de forme parallélépipédique ou cylindrique, portant, sur l'une de ses faces ou sur son enveloppe, une pluralité de connecteurs (9) par exemple à quatre ou cinq broches (10, 10') avantageusement disposés deux par deux, en étant alignés sur deux rangées, et destinés au branchement des fils de raccordements des différentes paires d'éléments de commutation (2, 2') complémentaires, au moyen de fiches de connexion à brochage complémentaire, un connecteur (11) de sortie, similaire aux connecteurs (9) et monté sur l'une des autres faces ou sur la base dudit boîtier (8), portant les sorties (3, 3') de signaux dudit dispositif (1).

4. Dispositif selon la revendication 3, caractérisé en ce que les connecteurs des éléments de commutation présentent quatre ou cinq broches (10, 10') permettant le branchement d'éléments de commutation (2, 2') réalisés en technologie deux fils ou trois fils, une broche (10), dite de sortie, étant affectée à la sortie signal de l'élément de commutation (2, 2') considérée, dont l'entrée est reliée au potentiel d'alimentation, et au moins une broche (10') desdits connecteurs (9) n'étant pas utilisée pour la liaison avec l'élément de commutation (2, 2') correspondant.

5. Dispositif selon l'une quelconque des revendications 1 à 4, caractérisé en ce qu'il comprend un ou plusieurs circuits (12) de remplacement et de simulation de la présence d'un élément de commutation (2 ou 2') indiquant systématiquement un état opposé à ou inverse de celui de l'élément de commutation (2 ou 2') complémentaire associé audit élément de commutation (2' ou 2) remplacé par ledit circuit (12) et avec lequel il forme une paire.

6. Dispositif selon les revendications 3 et 5 ou 4 et 5, caractérisé en ce que les circuits (12) de remplacement et de simulation sont installés à demeure dans le boîtier (8) contenant ledit dispositif (1), au niveau de chacun des connecteurs (9) de branchement des fils de raccordement des éléments de commutation (2, 2'), leur connexion, n'étant effective qu'en l'absence de branchement d'éléments de commutation (2, 2') au niveau des connecteurs (9) considérés.

7. Dispositif selon les revendications 3 et 5 ou 4 et 5, caractérisé en ce que chaque circuit (12) de remplacement et de simulation est disposé dans un boîtier (14) à connecteurs, de faible taille et en forme de bouchon, pouvant être enfiché de manière amovible sur les connecteurs (9) du boîtier (8) contenant le dispositif (1) en lieu et place des fiches de connexion des fils de raccordement de l'élément de commutation (2 ou 2') à remplacer.

8. Dispositif selon la revendication 4 ou la revendication 4 et l'une quelconque des revendications 5 à 7, caractérisé en ce que les différents connecteurs (9) sont reliés entre eux de manière à former une chaîne continue et bouclée, la broche de sortie (10) de chaque connecteur (9) étant reliée à la broche non affectée (10') d'un connecteur (9) d'un élément de commutation (2 ou 2') dont l'état est opposé à celui de l'élément de commutation (2 ou 2') fixé sur le connecteur (9) précédent dans la chaîne.

9. Dispositif selon la revendication 8 et l'une quelconque des revendications 5 à 7, caractérisé en ce que le circuit (12) de remplacement et de simulation consiste en un circuit inverseur dont l'entrée est reliée à la broche non affectée (10') du connecteur (9) de l'élément de commutation (2 ou 2') à remplacer et dont la sortie est reliée à la broche (10) de sortie dudit connecteur (9).

10. Dispositif selon l'une quelconque des revendications 3 à 9, caractérisé en ce que, à chaque connecteur (9) est associé un voyant (16) de signalisation d'état, monté en série avec l'élément de commutation (2 ou 2') branché sur le connecteur (9) considéré, un composant (17) d'absorption du courant résiduel de l'élément de commutation (2 ou 2') étant monté en parallèle sur ledit voyant (16).

11. Dispositif selon la revendication 10, caractérisé en ce que le composant 17 se présente sous la forme d'une diode de courant.

## Patentansprüche

1. Vorrichtung (1) zur Verbindung und logischen Verknüpfung einer Vielzahl von Paaren aus zwei Schaltzustände aufweisenden Schaltelementen (2', 2), wobei von den Schaltelementen jedes Paares normalerweise in komplementärer und entgegengesetzter Weise das eine Schaltelement das Vorhandensein eines ersten Zustands und das andere Schaltelement das Vorhandensein eines zweiten, vom ersten Zustand verschiedenen Zustands anzeigt, von einem entsprechenden Teil oder einem entsprechenden Element einer Gesamtschaltung, die sich in einem ersten oder einem zweiten Gesamtzustand von zwei bestimmten, verschiedenen Gesamtzuständen befinden kann, **dadurch gekennzeichnet,** daß die Vorrichtung zwei Ausgänge (3', 3) zur Abgabe von Binärsignalen aufweist, wobei der erste Gesamtzustand der Gesamtschaltung durch einen ersten Ausgang (3') der genannten Ausgänge (3', 3) angezeigt wird, der einen bestimmten Wert annimmt, während der zweite Ausgang (3) der genannten Ausgänge (3', 3) den Komplementärzustand inbezug auf den ersten Ausgang annimmt, wenn für jeden der Ausgänge oder jedes der Schaltelemenmte der Gesamtschaltung einerseits das gleichzeitig am ersten Gesamtzustand der Gesamtschaltung beteiligte Schaltelement (2') positiv das Vorhandensein des ersten Zustands angibt und andererseits das gleichzeitig am zweiten Zustand der Gesamtschaltung beteiligte Schaltelement (2) negativ das Nichtvorhandensein des zweiten Zustands angibt, oder wobei umgekehrt der zweite Gesamtzustand der Gesamtschaltung durch den den genannten, bestimmten Wert annehmenden, zweiten Ausgang (3) und durch den den genannten Komplementärzustand des zweiten Ausgangs annehmenden, ersten Eingang (3') angezeigt wird, wenn für jeden Ausgang oder jedes Schaltelement der Gesamtschaltung einerseits das gleichzeitig an dem genannten, ersten Gesamtzustand der Gesamtschaltung beteiligte Schaltelement (2') negativ das Nichtvorhandensein des ersten Zustands und andrerseits das gleichzeitig am zweiten Gesamtzustand beteiligte Schaltelement (2) positiv das Vorhandensein des zweiten Zustands angibt, wobei die Signale der genannten Ausgänge (3', 3) nach dem Vorhandensein der Komplementärzustände der Schaltelemente (2', 2) jedes Paares nicht gültig sind und die Signale der genannten Ausgänge (3'. 3) identisch sind, wenn die Gesamtschaltung in einem anderen Gesamtzustand als der genannte erste Zustand und der genannte zweite Zustand ist.

2. Vorrichtung nach Anspruch 3, dadurch gekennzeichnet, daß die Schaltelemente (2, 2') aus Annäherungsdetektoren bestehen, die vorzugsweise von induktiver Art sind oder auf eine Kontaktgabe oder den Vorbeigang ansprechen.

3. Vorrichtung nach Anspruch 1 oder 2, dadurch gekennzeichnet, daß sie in einem Gehäuse (8) angeordnet ist, das die Form eines Parallelflächners oder Zylinders hat und auf einer seiner Oberflächen oder auf seiner Außenfläche eine Vielzahl von Verbindern (9) mit beispielsweise vier oder fünf Kontaktstiften (10, 10') trägt, die vorteilhafterweise paarweise angeordnet sind, in zwei Reihen liegen und zum Anschluß von Anschlußadern verschiedener Paare von komplementären Schaltelementen (2, 2') dienen, und zwar mittels komplementärer Verbindungsstecker, wobei ein zu den Verbindern (9) gleichartiger Ausgangsverbinder (11) auf einer der anderen Flächen oder auf der Grundfläche des genannten Gehäuses befestigt ist und die Signalausgänge (3, 3') der genannten Vorrichtung (1) aufweist.

4. Vorrichtung nach Anspruch 3, dadurch gekennzeichnet, daß die Verbinder der Schaltelemente vier oder fünf Komtaktstifte (10, 10') aufweisen, die die Verbindung von Schaltelementen (2, 2') erlauben, die in zwei- oder dreiadriger Technologie aufgebaut sind, wobei ein Kontaktstift (10), der genannte Ausgangsstift, vom Ausgangssignal des betrachteten Schaltelements erregt wird, dessen Eingang Speisepotential führt, und mindestens ein Kontaktstift (10') der genannten Verbinder (9) nicht für die Verbindung mit dem entsprechenden Schaltelement (2, 2') benutzt wird.

5. Vorrichtung nach einem der Ansprüche 1 bis 4, dadurch gekennzeichnet, daß sie eine oder mehrere Schaltungen (12) zum Ersatz und zur Simulation des Vorhandenseins eines Schaltelements (2 oder 2') aufweist, die in systematischer Weise einen entgegegesetzten oder inversen Zustand zu demjenigen des komplementären Schaltelements (2 oder 2') anzeigt, das mit dem genannten Schaltelement (2, oder 2') verbunden ist, welches durch die genannte Schaltung (12) ersetzt ist und mit welchem es ein Paar bildet.

6. Vorrichtung nach den Ansprüchen 3 und 5 oder 4 und 5, dadurch gekennzeichnet, daß die dem Ersatz und der Simulation dienenden Schaltungen (12) ständig in dem die Vorrichtung (1) enthaltenden Gehäuse (8) eingebaut sind, und zwar auf der Höhe von jedem der Verbinder (9) zur Verbindung der Anschlußadern der Schaltelemente (2, 2'), wobei deren Verbindung nicht wirklich wie bei Abwesenheit der Verbindung der Schaltelemente (2, 2') auf der Höhe der betrachteten Verbinder (9) ist.

7. Vorrichtung nach den Ansprüchen 3 und 5 oder 4 und 5, dadurch gekennzeichnet, daß jede dem Ersatz und der Simulation dienende Schaltung (12) in einem Verbindergehäuse (14) von geringer Größe und in Form eines Steckbausteins angeordnet ist, wobei dieses Verbindergehäuse in abnehmbarer Weise auf die Verbinder (9) des die Vorrichtung (1) aufnehmenden Gehäuses (8) aufgesteckt werden kann und die Stelle von Verbindungssteckern der Anschlußadern der zu ersetzenden Schaltelemente einnimmt.

8. Vorrichtung nach Anspruch 4 oder nach Anspruch 4 und einem der Ansprüche 5 bis 7, dadurch gekennzeichnet, daß die verschiedenen Verbinder (9) untereinander in der Weise verbunden sind, daß eine fortgesetzte und geschlossene Kette gebildet wird, wobei der Ausgangskontaktstift (10) jedes Verbinders (9) mit dem nicht von einem Verbinder (9) eines Schaltelements (2 oder 2') erregten Kontaktstift verbunden ist, wobei der Schaltzustand dieses Schaltelements entgegengesetzt zu demjenigen des Schaltelements (2 oder 2') ist, das auf dem in der Kette vorhergehenden Verbinder (9) befestigt ist.

9. Vorrichtung nach Anspruch 8 und einem der Ansprüche 5 bis 7, dadurch gekennzeichnet, daß die dem Ersatz und der Simulation dienende Schaltung (12) aus einer Inverterschaltung besteht, deren Eingang mit dem nicht erregten Kontaktstift (10') des Verbinders (9) des zu ersetzenden Schaltelements (2 oder 2') und deren Ausgang mit dem Ausgangsstift (10) des genannten Verbinders (9) verbunden ist.

10. Vorrichtung nach einem der Ansprüche 3 bis 9, dadurch gekennzeichnet, daß jedem Verbinder (9) eine Kontrolleuchte (16) zur Zustandsanzeige zugeordnet ist, die in Reihe mit demjenigen Schaltelement liegt, das auf dem betrachteten Verbinder (9) angeschlossen ist, wobei eine Komponente (17) zur Aufnahme des Reststroms des Schaltelements (2 oder 2') parallel zur genannten Kontrolleuchte (16) geschaltet ist.

11. Vorrichtung nach Anspruch 10, dadurch gekennzeichnet, daß die Komponente (17) eine Freilaufdiode ist.

## Claims

1. Device (1) for the branching and logical combination of a plurality of pairs of switching elements (2', 2) with two states, the switching elements of each pair normally indicating in a complementary and opposing manner, one the production of a first state and the other the production of a second state distinct from the first state of a respective part or of a respective element of a complex assembly, which complex assembly can be located in a first or second general state of two distinct predetermined general states, characterised in that the device has two binary signal outputs (3', 3), the first general state of the complex assembly being indicated by a first output (3') of said outputs (3', 3) assuming a predetermined value and the second output (3) of the said outputs assuming the complementary state of the first output when, for each of the parts or each of the elements of the complex assembly, the switching element (2') contributing concomitantly to said first general state of the complex assembly positively indicates the production of the first state, on the one hand, and the switching element (2) contributing concomitantly to the second general state of the complex assembly negatively indicates the non-production of the second state, on the other hand, or, conversely, the second general state of the complex assembly being indicated by the second output (3) assuming said predetermined value and the first output (3') assuming the complementary state of the second output when, for each of the parts or each of the elements of the complex assembly, the switching element (2') contributing concomitantly to said first general state of the complex assembly negatively indicates the non-production of the first state, on the one hand, and the switching element (2) contributing concomitantly to the second general state of the complex assembly positively indicates the production of the second state, on the other hand, the signals from said outputs (3', 3) only being validated after verification of the complementary states of the switching elements (2', 2) of each pair and the signals from said outputs (3', 3) being identical when the complex assembly is in a general state other than said first and second general states.

2. Device according to claim 1, characterised in that the switching elements (2, 2') consist of proximity switches, preferably of the inductive, contact or passage type.

3. Device according to any one of claims 1 and 2, characterised in that it is arranged in a casing (8) of cuboid or cylindrical shape carrying, on one of its faces or on its cover, a plurality of connectors (9), for example with four or five pins (10, 10') advantageously arranged two by two while being aligned in two rows and intended for the branching of wires for joining the various pairs of complementary switching elements (2, 2') by means of connecting plugs with complementary pin configurations, an output connector (11) similar to the connectors (9) and mounted on one of the other faces or on the base of said casing (8) carrying the signal outputs (3, 3') of said device (1).

4. Device according to claim 3, characterised in that the connectors of the switching elements have four or five pins (10, 10') allowing the branching of switching elements (2, 2') produced by two wire or three wire technology, one pin (10), the so-called output pin, being assigned to the signal output of the switching element (2, 2') under consideration of which the input is connected to the supply potential, and at least one pin (10') of said connectors (9) not being used for the link to the corresponding switching element (2, 2').

5. Device according to any one of claims 1 to 4, characterised in that it comprises one or more circuits (12) for replacing and simulating the presence of a switching element (2 or 2') systematically indicating a state opposed or reversed with respect to that of the complementary switching element (2 or 2') associated with said switching element (2' or 2) replaced by said circuit (12) and with which it forms a pair.

6. Device according to claims 3 and 5 or 4 and 5, characterised in that the replacement and simulating circuits (12) are permanently installed in the casing (8) containing said device (1) in the region of each of the connectors (9) for branching the wires for joining the switching elements (2, 2'), their connection being effective only in the absence of branching of switching elements (2, 2') in the region of the connectors (9) under consideration.

7. Device according to claims 3 and 5 or 4 and 5, characterised in that each circuit (12) for replacement and simulation is arranged in a casing (14) with connectors of small size and in the form of a stopper which can be removably fitted on the connectors (9) of the casing (8) containing the device (1) instead of the connecting plugs of the wires joining the switching element (2 or 2') to be replaced.

8. Device according to claim 4 or claim 4 and any one of claims 5 to 7, characterised in that the various connectors (9) are linked to one another so as to form a continuous looped chain, the output pin (10) of each connector (9) being linked to the unassigned pin (10') of a connector (9) of a switching element (2 or 2') of which the state is opposed to that of the switching element (2 or 2') fixed on the preceding connector (9) in the chain.

9. Device according to claim 8 and any one of claims 5 to 7, characterised in that the circuit (12) for replacement and simulation consists of a reversing circuit of which the input is linked to the unassigned pin (10') of the connector (9) of the switching element (2 or 2') to be replaced and of which the output is linked to the output pin (10) of said connector (9).

10. Device according to any one of claims 3 to 9, characterised in that a state-signalling indicator (16) mounted in series with the switching element (2 or 2') branched on the connector (9) under consideration is associated with each connector (9), a component (17) for absorbing the residual current from the switching element (2 or 2') being mounted in parallel on said indicator (16).

11. Device according to claim 10, characterised in that the component (17) has the form of a current diode.
